# EUROPEAN PATENT SPECIFICATION

(11) **EP 4 022 932 B1**
(45) Date of publication and mention of the grant of the patent: **25.11.2026**
(21) Application number: 20874461.5
(22) Date of filing: 05.10.2020
(51) Int. Cl.: H04L 9/08, H04L 9/14, H04L 9/40, H04L 9/32, H04N 21/266, H04N 21/2347, H04N 21/81, H04N 21/2343, H04N 21/4405

(54) **SECURE DISTRIBUTION OF MULTI-RESOLUTION POINT CLOUD**
SICHERE VERTEILUNG EINER PUNKTWOLKE MIT MEHREREN AUFLÖSUNGEN
DISTRIBUTION SÉCURISÉE DE NUAGE DE POINTS À MULTIPLE RÉSOLUTION

(30) Priority: 08.10.2019 US 201916596580
(43) Date of publication of application: 06.07.2022
(73) Proprietor: Sony Group Corporation, Tokyo 108-0075 (JP); Sony Pictures Entertainment, Inc., Culver City, CA 90232 (US)
(72) Inventor: DIEHL, Eric, Culver City, CA 90232 (US)
(74) Representative: D Young & Co LLP
(86) International application number: PCT/US2020/054296
(87) International publication number: WO 2021/071785

(56) References cited:
- US-A1- 2005 180 563
- US-A1- 2005 276 416
- US-A1- 2005 276 416
- US-A1- 2007 223 697
- US-A1- 2011 150 217
- US-A1- 2017 347 122
- US-A1- 2017 347 122
- STEFANO FERRARI ET AL: "Reducing and Filtering Point Clouds With Enhanced Vector Quantization", IEEE TRANSACTIONS ON NEURAL NETWORKS, IEEE SERVICE CENTER, PISCATAWAY, NJ, US, vol. 18, no. 1, 1 January 2007 (2007-01-01), pages 161 - 177, XP011148608, ISSN: 1045-9227, DOI: 10.1109/TNN.2006.886854

## Description

### BACKGROUND

### Field

The present disclosure relates to point cloud, and more specifically, to secure distribution of multiresolution point cloud.

### Background

A point cloud (PC) is a set of data points in space, which provides a new method to describe a 3-dimensional (3-D) object or landscape. Thus, the PC, as a digital asset, has an intrinsic value, which can be subject to piracy if not adequately protected. Further, it may be of interest to distributors to deliver assets of the PC in different resolutions so that the distributor can apply better control of its delivery by allowing the user to access only the granted resolution.

One solution to the distribution issues noted above is to create one representation of the PC asset for each expected resolution and protect each representation independently. However, since the PC asset can be a large digital representation, creating one representation of the PC asset for each expected resolution can result in a much larger volume than the original one. Relevant background art includes US 2017/0347122 which discloses scalable compression of partitions of point cloud data, US 2011/0150217 which discloses encryption of different layers of video coding using keys, and US 2005/0276416 which discloses layered access to a codestream depending on an access type and a corresponding decryption key.

### SUMMARY

The present disclosure provides for controlling the distribution of different resolutions of the same PC without increasing the overall size of the distributed content.

The invention is set out in independent claim 1 for a point cloud distribution system and in independent claim 5 for the corresponding method. Preferred embodiments are defined by the dependent claims.

### BRIEF DESCRIPTION OF THE DRAWINGS

The details of the present disclosure, both as to its structure and operation, may be gleaned in part by study of the appended drawings, in which like reference numerals refer to like parts, and in which:
FIG. 1 is a block diagram of a PC distribution system in accordance with one implementation of the present disclosure;
FIG. 2 is a block diagram of a system for generating a lowest resolution PC (ResPC₁) in accordance with one implementation of the present disclosure;
FIG. 3 is a block diagram of a system for generating a first intermediate resolution PC (ResPC₂) in accordance with one implementation of the present disclosure;
FIG. 4 is a block diagram of a PC distribution system in accordance with the invention;
FIG. 5 is a block diagram of a system for generating a lowest resolution PC (ResPC₁) of the three resolutions in accordance with one implementation of the present disclosure;
FIG. 6 is a block diagram of a system for generating a first intermediate resolution PC (ResPC₂) of the three resolutions in accordance with another implementation of the present disclosure;
FIG. 7A is a flow diagram of a process for distributing different resolution PCs of a full resolution PC in accordance with one implementation of the present disclosure;
FIG. 7B is a flow diagram of a process for generating a desired resolution PC in accordance with one implementation of the present disclosure;
FIG. 8 is a block diagram of an apparatus for distributing different resolution PCs of a full resolution PC in accordance with one implementation of the present disclosure;
FIG. 9A is a representation of a computer system and a user in accordance with an implementation of the present disclosure; and
FIG. 9B is a functional block diagram illustrating the computer system hosting the PC distribution application in accordance with an implementation of the present disclosure.

### DETAILED DESCRIPTION

As described above, since the point cloud (PC) asset can be a large digital representation, creating one representation of the PC asset for each expected resolution can result in a much larger volume than the original one. Certain implementations of the present disclosure provide for controlling the distribution of different resolutions of the same PC without increasing the overall size of the distributed content. After reading these descriptions, it will become apparent how to implement the disclosure in various implementations and applications. Although various implementations of the present disclosure will be described herein, it is understood that these implementations are presented by way of example only, and not limitation. As such, the detailed description of various implementations should not be construed to limit the scope or breadth of the present disclosure.

According to the invention, the full resolution PC is split into disjointed elements (one element per expected resolution) using "sieve" functions. Further, each disjointed element is protected using a secret key unique to each element.

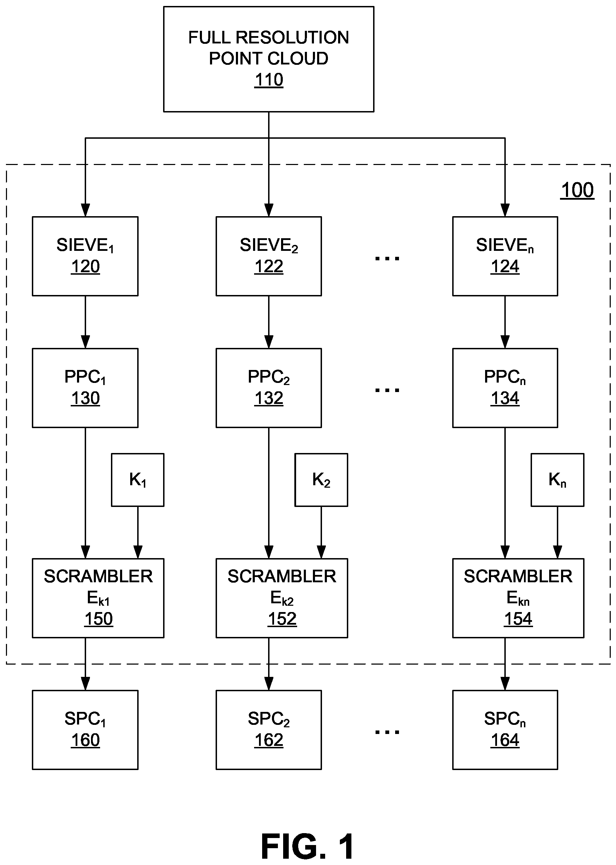

FIG. 1 is a block diagram of a PC distribution system 100 in accordance with one implementation of the present disclosure. In one example not forming part of the invention, the PC distribution system 100 includes n sieve function generators (sieve₁, sieve₂, ... sieveₙ) 120, 122, 124 and n scramblers (Eₖ₁, Eₖ₂, ... Eₖₙ) 150, 152, 154. Further, the PC distribution system 100 receives and transforms the full resolution PC 110 into n elements of scrambled PCs 160, 162, 164.

In the illustrated implementation of FIG. 1, the sieve function generators (sieve₁, sieve₂, ... sieveₙ) 120, 122, 124 are applied to the full resolution PC 110 to generate n partial PCs (PPC₁, PPC₂, ... PPCₙ) 130, 132, 134. Thus, the sieve function generators split the full resolution PC 110 into n disjointed elements. That is, sieve₁ function 120 decimates the full resolution PC 110 and keeps some points following a given logic, for example, an expected density of points. Thus, *PPC₁ **=** Sieve₁(fullPC).* Accordingly, the sieve function generators (sieve₁, sieve₂, ... sieveₙ) 120, 122, 124 generate disjointed partial PCs (PPC₁, PPC₂, ... PPCₙ) 130, 132, 134, which cover the entire full resolution PC 110. Therefore, following are true: ${Sieve}_{1} \left(FullPC\right) ∩ {Sieve}_{2} \left(FullPC\right) ∩ … ∩ {Sieve}_{n} \left(FullPC\right) = ∅$ [1] ${Sieve}_{1} \left(FullPC\right) ∪ {Sieve}_{2 \left(FullPC\right)} ∪ … ∪ {Sieve}_{n} \left(FullPC\right) = FullPC .$ [2]

In the illustrated implementation of FIG. 1, the scrambler (Eₖ₁) 150 protects PPC₁ 130 using a secret key K₁ to produce a scrambled PC (SPC₁) 160. In one implementation, the scrambler 150 is a cryptographic encryption or a geometric transformation. Thus, *SPC₁ = E_{K₁}(PPC₁) = E*_{*K*₁}(*Sieve*₁(*fullPC*)). The scramblers (Eₖ₂ ... Eₖₙ) 152, 154 similarly protect the other partial PCs using corresponding secret keys (K₂ ... Kₙ) to produce the other scrambled PCs (SPC₂, ... SPCₙ) 162, 164. Therefore, by generalization, *SPCₙ = E_{Kₙ}(PPCₙ)* = *E_{Kₙ}*(*Sieveₙ*(*fullPC*)). Once n scrambled PCs (SPC₁, SPC₂, ... SPCₙ) 160, 162, 164 have been produced using the keys (K₁, K₂, ... Kₙ), the scrambled PCs and a selected key can be distributed to an intended receiver based on an appropriate resolution determined for the intended receiver. However, it should be noted that all scrambled PCs can be distributed without any risk, as along as the selected key is selected based on the appropriate resolution determined for the intended receiver.

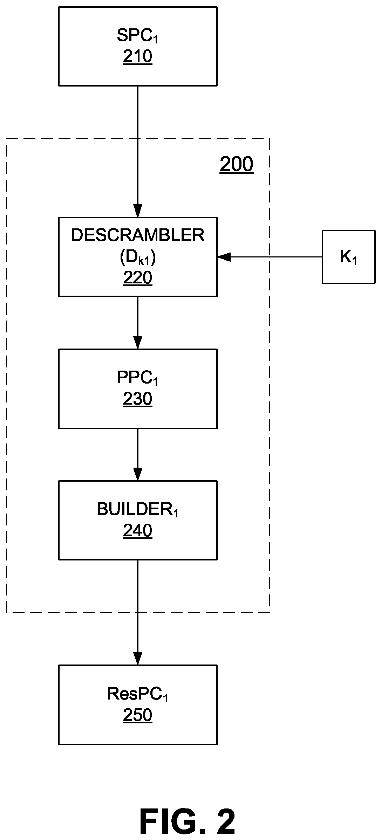

FIG. 2 is a block diagram of a system 200 for generating a lowest resolution PC (ResPC₁) in accordance with one implementation of the present disclosure. In the illustrated implementation of FIG. 2, the system 200 includes a descrambler 220 and a builder 240.

In one implementation, the descrambler (Dₖ₁) 220 receives and descrambles a lowest resolution scrambled PC (SPC₁) 210 using a secret key K₁. If the key K₁ is a proper key for SPC₁ 210, the descrambler (Dₖ₁) 220 outputs a partial PC (PPC₁) 230 as follows: *PPC₁ = D*_{*K*₁}(*SPC*₁). The builder 240 then receives and transforms the partial PC (PPC₁) 230 into the lowest resolution PC (ResPC₁) by reformatting the PPC₁ into a format compliant with tools that will use the PC.

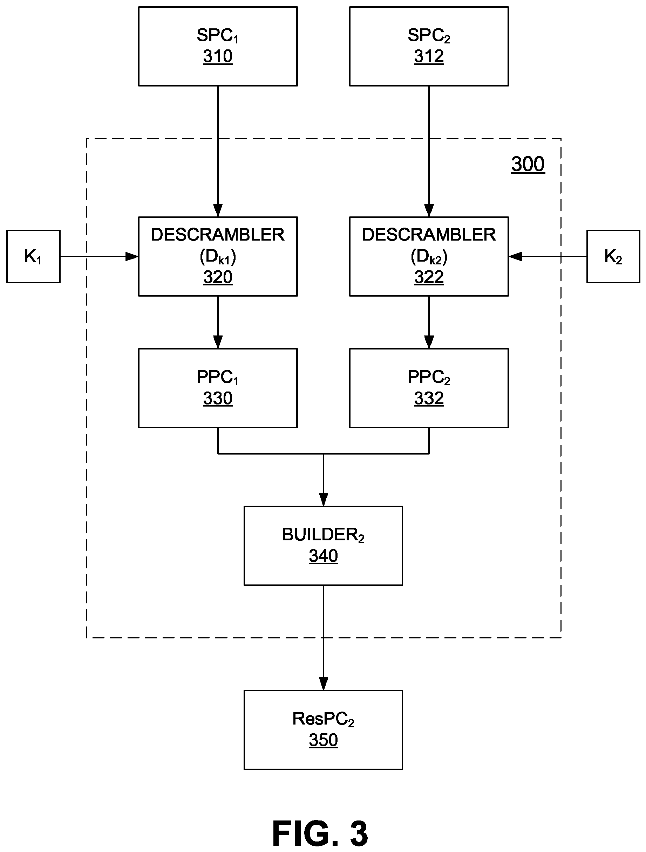

FIG. 3 is a block diagram of a system 300 for generating a first intermediate resolution PC (ResPC₂) in accordance with one implementation of the present disclosure. In the illustrated implementation of FIG. 3, the system 300 includes descramblers (Dₖ₁, Dₖ₂) 320, 322 and a builder 340.

In one implementation, the descramblers (Dₖ₁, Dₖ₂) 320, 322 receive and descramble two scrambled PCs (SPC₁ and SPC₂) 310, 312 using two secret keys (K₁ and K₂), respectively. Thus, the descrambler (Dₖ₁) 320 descrambles the scrambled PC₁ (SPC₁) 310 using the secret key K₁ to produce the partial PC₁ (PPC₁) 330, while the descrambler (Dₖ₂) 322 descrambles the scrambled PC₂ (SPC₂) 312 using the secret key K₂ to produce the partial PC₂ (PPC₂) 332. The builder 340 then receives and transforms the partial PC₁ (PPC₁) 330 and the partial PC₂ (PPC₂) 332 into the first intermediate resolution PC (ResPC₂) 350 by recombining the partial PC₁ (PPC₁) 330 and the partial PC₂ (PPC₂) 332, and reformatting the combined partial PC into a format compliant with tools that will use the PC. The following equation summarizes the ${ResPC}_{2} = {Builder}_{2} \left({PPC}_{1}, {PPC}_{2}\right) = {Builder}_{2} \left({D}_{{K}_{1}}\left({SPC}_{1}\right),{D}_{{K}_{2}}\left({SPC}_{2}\right)\right) .$ [3]

By extension, the full resolution PC can be expressed as follows: $\begin{matrix}FullPC = {ResPC}_{n} = {Builder}_{n} \left({PPC}_{1},{PPC}_{2},…,{PPC}_{n}\right) \\ = {Builder}_{n} \left({D}_{{K}_{1}}\left({SPC}_{1}\right),{D}_{{K}_{2}}\left({SPC}_{2}\right),…,{D}_{{K}_{n}}\left({SPC}_{n}\right)\right) .\end{matrix}$ [4]

In some implementations, the sieve functions may be associated with an arithmetic compression function. In that case, the size of the partial PC is smaller due to the compression. Thus, in this case, the builder function first decompresses the descrambled PC before recombining them.

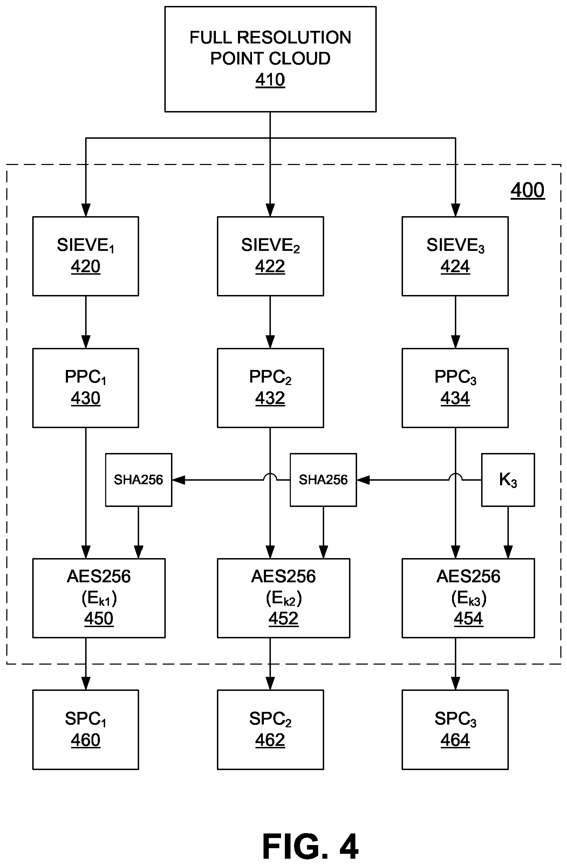

FIG. 4 is a block diagram of a PC distribution system 400 in accordance with the invention. According to FIG. 4, a basic data structure (e.g., a linear succession of points) is used to represent the PC in which three resolutions are supported: lowest, intermediate, and full. The lowest resolution is 1/16 of the full resolution and the intermediate resolution is 1/4 of the full resolution.

As can be seen in FIG. 4, the distribution system 400 includes three sieve functions (sieve₁, sieve₂, sieve₃) 420, 422, 424 and three scramblers (i.e., AES256s Eₖ₁, Eₖ₂, Eₖ₃) 450, 452, 454. In FIG. 4, sieve functions 420, 422, 424 operate in slices of 16 points. As shown in Table 1, sieve₁ 420 keeps the first point of each slice, sieve₂ 422 keeps the 5th, 9th and 13th points of each slice, and sieve₃ 424 keeps the 2nd, 3rd, 4th, 6th, 7th, 8th, 10th, 11th, 12th, 14th, 15th and 16th points of each slice. Further, the scrambler 450 is the cryptographic encryption AES256.

**Table 1**

| FullPC | P 1 | P 2 | P 3 | P 4 | P 5 | P 6 | P 7 | P 8 | P 9 | P 10 | P 11 | P 12 | P 13 | P 14 | P 15 | P 16 |
|---|---|---|---|---|---|---|---|---|---|---|---|---|---|---|---|---|
| PPC₁ | P1 | | | | | | | | | | | | | | | |
| PPC2 | P5 | P9 | P13 | | | | | | | | | | | | | |
| PPC3 | P2 | P3 | P4 | P6 | P7 | P8 | P10 | P11 | P12 | P14 | P15 | P16 | | | | |

However, in the system 400 of FIG. 4, the key management is more elaborated, where the packaging generates a 256-bit random number K₃. Then it calculates the keys K₁ and K₂ with the following equations: ${K}_{2} = SHA 256 \left({K}_{3}\right) ,$ [5] ${K}_{1} = SHA 256 \left({K}_{2}\right) = SHA 256 \left(SHA256\left({K}_{3}\right)\right) .$ [6]

That is, the cascading keys are generated using the one-way hashing functions (e.g., SHA256 functions) starting from the key dedicated to the highest resolution. Therefore, in FIG. 4, the AES256 scrambler (Eₖ₃) 454 protects PPC₃ 434 using a secret key K₃ to produce a scrambled PC (SPC₃) 464. The scramblers (Eₖ₁, Eₖ₂) 450, 452 subsequently protect the other partial PCs using corresponding secret keys (K₁ , K₂) generated using the SHA256 function (i.e., the one-way hashing function), as shown above, to produce the other scrambled PCs (SPC₁, SPC₂) 460, 462. Once the three scrambled PCs (SPC₁, SPC₂, SPC₃) 460, 462, 464 have been produced using the keys (K₁, K₂, K₃), the scrambled PCs and a selected key can be distributed to a receiver based on the appropriate resolution to be sent to the intended receiver.

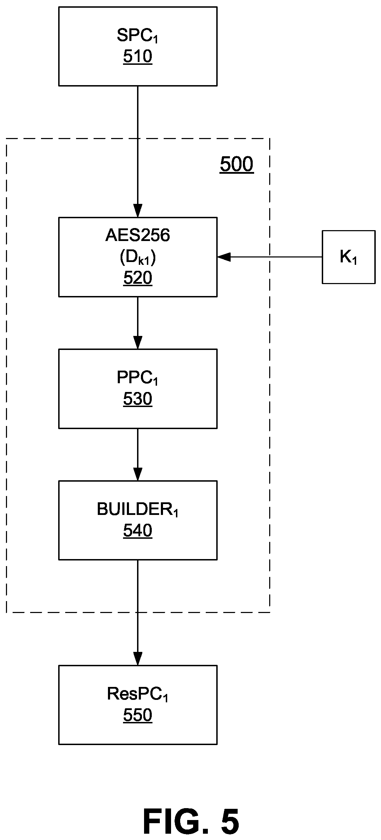

FIG. 5 is a block diagram of a system 500 for generating a lowest resolution PC (ResPC₁) of the three resolutions in accordance with one implementation of the present disclosure. In the illustrated implementation of FIG. 5, the system 500 includes an AES256 descrambler (Dₖ₁) 520 and a builder 540.

In one implementation, the AES256 descrambler (Dₖ₁) 520 receives and descrambles a lowest resolution scrambled PC (SPC₁) 510 using a secret key K₁. If the key K₁ is a proper key for SPC₁ 510, the AES256 descrambler (Dₖ₁) 520 outputs a partial PC (PPC₁) 530. The builder 540 then receives and transforms the partial PC (PPC₁) 530 into the lowest resolution PC (ResPC₁) 550. However, in this implementation, the builder 540 does not need to modify the partial PC (PPC₁) 530. Thus, the function of the builder 540 is the identity function.

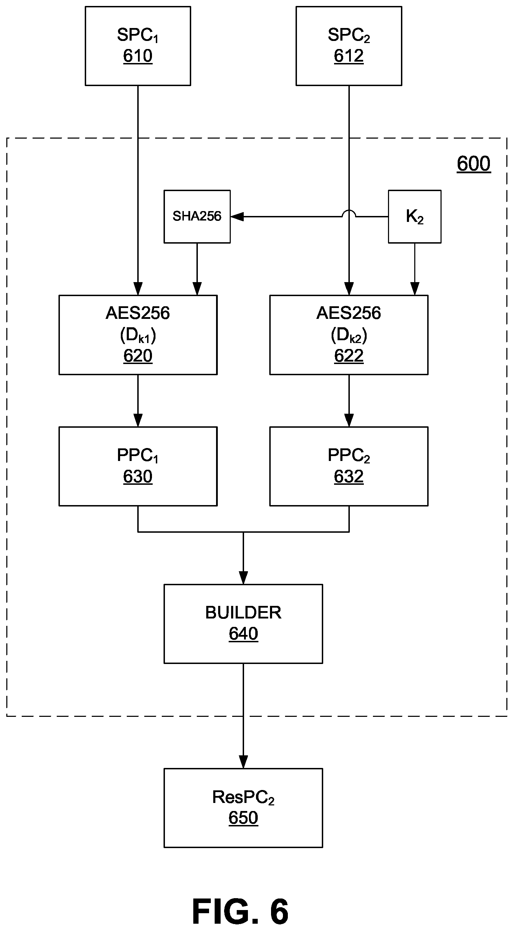

FIG. 6 is a block diagram of a system 600 for generating a first intermediate resolution PC (ResPC₂) of the three resolutions in accordance with another implementation of the present disclosure. In the illustrated implementation of FIG. 6, the system 600 includes an AES256 descramblers (Dₖₗ, Dₖ₂) 620, 622 and a builder 640.

In one implementation, the AES256 descramblers (Dₖₗ, Dₖ₂) 620, 622 receive and descramble two scrambled PCs (SPC₁ and SPC₂) 610, 612 using two (K₁ and K₂) of the three secret keys, respectively. As described before, K₃ is generated as a 256-bit random number K₃. Then, K₂ and K₁ are calculated as K₂ = SHA256(K₃) and K₁ = SHA256(K₂). Thus, the AES256 descrambler (Dₖ) 620 descrambles the scrambled PC₁ (SPC₁) 610 using the secret key K₁ to produce the partial PC₁ (PPC₁) 630, while the AES256 descrambler (Dₖ₂) 622 descrambles the scrambled PC₂ (SPC₂) 612 using the secret key K₂, to produce the partial PC₂ (PPC₂) 632. The builder 640 then receives and transforms the partial PC₁ (PPC₁) 630 and the partial PC₂ (PPC₂) 632 into the first intermediate resolution PC (ResPC₂) 650 by recombining the partial PC₁ (PPC₁) 630 and the partial PC₂ (PPC₂) 632.

The following equation summarizes the system 600: ${ResPC}_{2} = {Builder}_{2} \left({PPC}_{1}, {PPC}_{2}\right) = {Builder}_{2} \left({D}_{{K}_{1}}\left({SPC}_{1}\right),{D}_{{K}_{2}}\left({SPC}_{2}\right)\right) .$ [7]

By extension, the full resolution PC, in this implementation, can be expressed as follows: $\begin{matrix}FullPC = {ResPC}_{3} = {Builder}_{3} \left({PPC}_{1}, {PPC}_{2}, {PPC}_{3}\right) = \\ {Builder}_{3} \left({D}_{{K}_{1}}\left({SPC}_{1}\right),{D}_{{K}_{2}}\left({SPC}_{2}\right),{D}_{{K}_{3}}\left({SPC}_{3}\right)\right) .\end{matrix}$ [8]

**Table 2**

| | | | | | | | | | | | | | | | | |
|---|---|---|---|---|---|---|---|---|---|---|---|---|---|---|---|---|
| PPC₁ | PP1 | | | | | | | | | | | | | | | |
| PPC2 | PP21 | Pp22 | PP23 | | | | | | | | | | | | | |
| ResPC2 | PP1 | PP21 | PP22 | PP23 | | | | | | | | | | | | |

Thus, as shown in Table 2, Builder₂ (equivalent to Builder 640 in FIG. 6) in Equation [7] works on slices of four points (see Table 2).

**Table 3**

| | | | | | | | | | | | | | | | | |
|---|---|---|---|---|---|---|---|---|---|---|---|---|---|---|---|---|
| PPC1 | PP 1 | | | | | | | | | | | | | | | |
| PPC2 | PP 21 | PP 22 | PP 23 | | | | | | | | | | | | | |
| PPC3 | PP 31 | PP 32 | PP 33 | PP 34 | PP 35 | PP 36 | PP 37 | PP 38 | PP 39 | PP 40 | PP 41 | PP 42 | | | | |
| FullPC | PP 1 | PP 31 | PP 32 | PP 33 | PP 21 | PP 34 | PP 35 | PP 36 | PP 22 | PP 37 | PP 38 | PP 39 | PP 23 | PP 40 | PP 41 | PP 42 |

As shown in Table 3, Builder₃ in Equation [8], which builds the full PC, works on slices of 16 points.

In one implementation, if the distributor wants to grant only access to the lowest resolution PC (ResPC₁), it delivers only K₁. Further, the distributor may deliver all three scrambled PCs (SPC₁, SPC₂, SPC₃), but the user can only descramble scrambled PC₁ (SPC₁). If the distributor wants to grant access to the first intermediate resolution PC (ResPC₂), it delivers K₂. Otherwise, if the distributor wants to grant access to the full resolution, it delivers K₃.

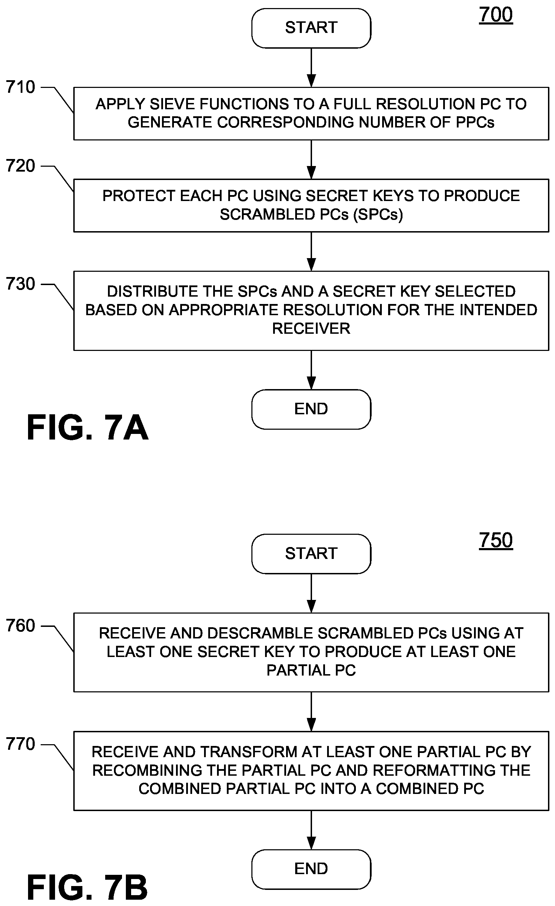

FIG. 7A is a flow diagram of a process 700 for distributing different resolution PCs of a full resolution PC in accordance with one implementation of the present disclosure. In the illustrated implementation of FIG. 7A, a plurality of sieve functions is applied, at block 710, to the full resolution PC to generate a corresponding number of partial PCs (corresponding to the number of sieve functions), which are disjointed elements. Thus, each sieve function decimates the full resolution PC and keeps some points following a given logic to generate disjointed partial PCs, which cover the entire full resolution PC.

Each PC of the corresponding number of partial PCs is then protected, at block 720, using the corresponding number of secret keys to produce the corresponding number of scrambled PCs. For example, PPC₁ is protected using a secret key K₁ to produce SPC₁, PPC₂ is protected using a secret key K₂ to produce SPC₂, and so on, until the corresponding number of partial PCs have been protected. The corresponding number of scrambled PCs and a secret key (selected based on an appropriate resolution for an intended receiver) are distributed, at block 730.

FIG. 7B is a flow diagram of a process 750 for generating a desired resolution PC in accordance with one implementation of the present disclosure. In the illustrated implementation of FIG. 7B, a plurality of scrambled PCs is received and descrambled, at block 760, using at least one secret key to produce at least one partial PC. Then, at block 770, the at least one partial PC is received and transformed by recombining the partial PCs and reformatting the combined partial PC into a combined PC.

In one implementation, the combined PC has a format compliant with tools that will use the combined PC. In one implementation, the combined PC is the desired resolution PC. In one implementation, a first secret key selected for a higher resolution PC than a second secret key selected for a lower resolution PC can be used to descramble the higher resolution PC and the lower resolution PC.

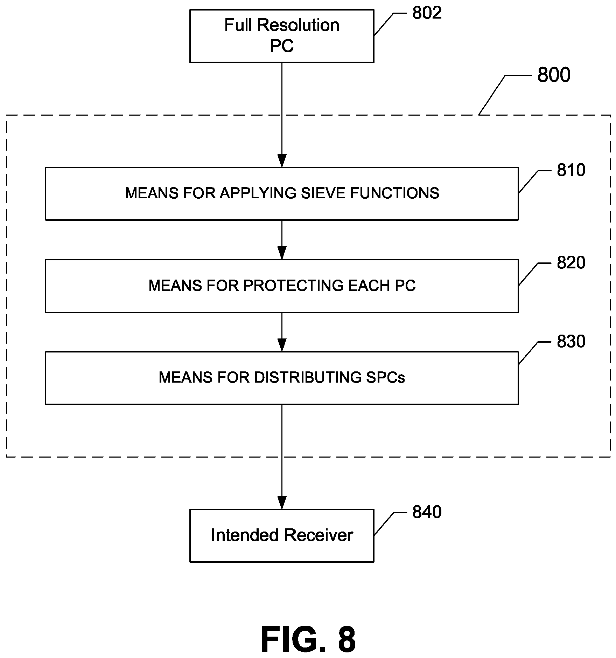

FIG. 8 is a block diagram of an apparatus 800 for distributing different resolution PCs of a full resolution PC in accordance with one implementation of the present disclosure. In the illustrated implementation of FIG. 8, the apparatus 800 includes means for applying sieve functions 810, means for protecting each PC 820, and means for distributing SPCs 830.

In one implementation, the means for applying sieve functions 810 applies a plurality of sieve functions to the full resolution PC to generate a corresponding number of partial PCs (corresponding to the number of sieve functions), which are disjointed elements. Thus, the means for applying sieve functions 810 uses each sieve function to decimate the full resolution PC and to keep some points following a given logic to generate disjointed partial PCs, which cover the entire full resolution PC.

In one implementation, the means for protecting each PC 820 protects each PC of the corresponding number of partial PCs using the corresponding number of secret keys to produce the corresponding number of scrambled PCs. For example, PPC₁ is protected using a secret key K₁ to produce SPC₁, PPC₂ is protected using a secret key K₂ to produce SPC₂, and so on, until the corresponding number of partial PCs have been protected. In one implementation, the means for protecting each PC 820 is a scrambler. In another implementation, the means for protecting each PC 820 is an AES scrambler.

In one implementation, the means for distributing SPCs 830 distributes: (1) the corresponding number of scrambled PCs; and (2) a secret key, which is selected based on an appropriate resolution for an intended receiver. In one implementation, the number of scrambled PCs distributed is equal to the number of scrambled PCs generated by the means for protecting each PC 820. In another implementation, only the scrambled PCs that are necessary to descramble to the appropriate resolution for the selected key are distributed.

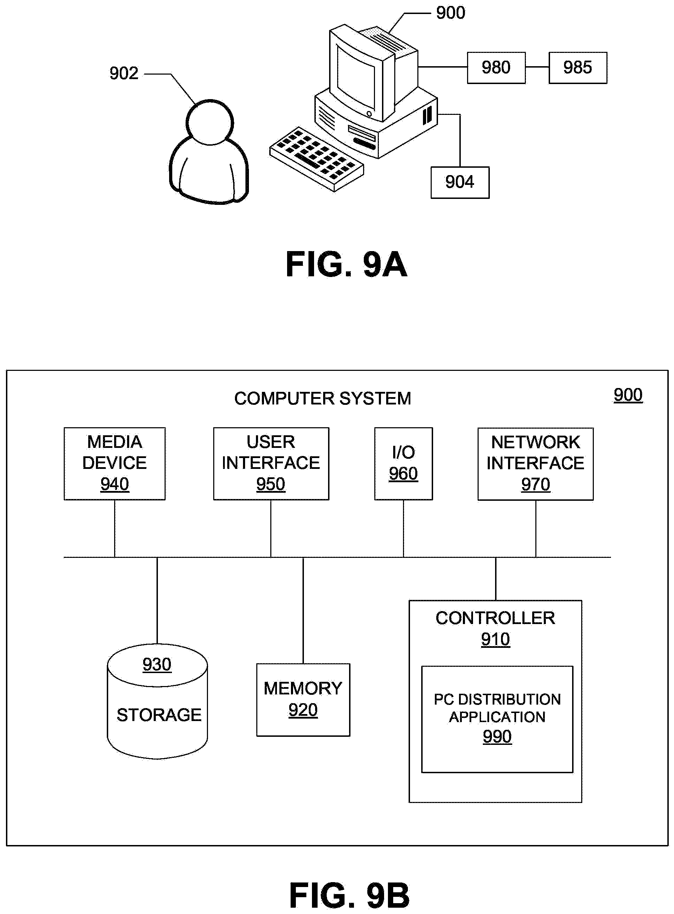

FIG. 9A is a representation of a computer system 900 and a user 902 in accordance with an implementation of the present disclosure. The user 902 uses the computer system 900 to implement a PC distribution application 990 as illustrated and described with respect to the PC distribution system 100 of the block diagram shown in FIG. 1 and the process 700 illustrated in FIG. 7.

The computer system 900 stores and executes the PC distribution application 990 of FIG. 9B. In addition, the computer system 900 may be in communication with a software program 904. Software program 904 may include the software code for the PC distribution application 990. Software program 904 may be loaded on an external medium such as a CD, DVD, or a storage drive, as will be explained further below.

Furthermore, computer system 900 may be connected to a network 980. The network 980 can be connected in various different architectures, for example, client-server architecture, a Peer-to-Peer network architecture, or other type of architectures. For example, network 980 can be in communication with a server 985 that coordinates engines and data used within the PC distribution application 990. Also, the network can be different types of networks. For example, the network 980 can be the Internet, a Local Area Network or any variations of Local Area Network, a Wide Area Network, a Metropolitan Area Network, an Intranet or Extranet, or a wireless network.

FIG. 9B is a functional block diagram illustrating the computer system 900 hosting the PC distribution application 990 in accordance with an implementation of the present disclosure. A controller 910 is a programmable processor and controls the operation of the computer system 900 and its components. The controller 910 loads instructions (e.g., in the form of a computer program) from the memory 920 or an embedded controller memory (not shown) and executes these instructions to control the system. In its execution, the controller 910 provides the PC distribution application 990 with a software system, such as to enable the creation and configuration of engines and data extractors within the PC distribution application 990. Alternatively, this service can be implemented as separate hardware components in the controller 910 or the computer system 900.

Memory 920 stores data temporarily for use by the other components of the computer system 900. In one implementation, memory 920 is implemented as RAM. In one implementation, memory 920 also includes long-term or permanent memory, such as flash memory and/or ROM.

Storage 930 stores data either temporarily or for long periods of time for use by the other components of the computer system 900. For example, storage 930 stores data used by the PC distribution application 990. In one implementation, storage 930 is a hard disk drive.

The media device 940 receives removable media and reads and/or writes data to the inserted media. In one implementation, for example, the media device 940 is an optical disc drive.

The user interface 950 includes components for accepting user input from the user of the computer system 900 and presenting information to the user 902. In one implementation, the user interface 950 includes a keyboard, a mouse, audio speakers, and a display. The controller 910 uses input from the user 902 to adjust the operation of the computer system 900.

The I/O interface 960 includes one or more I/O ports to connect to corresponding I/O devices, such as external storage or supplemental devices (e.g., a printer or a PDA). In one implementation, the ports of the I/O interface 960 include ports such as: USB ports, PCMCIA ports, serial ports, and/or parallel ports. In another implementation, the I/O interface 960 includes a wireless interface for communication with external devices wirelessly.

The network interface 970 includes a wired and/or wireless network connection, such as an RJ-45 or "Wi-Fi" interface (including, but not limited to 802.11) supporting an Ethernet connection.

The computer system 900 includes additional hardware and software typical of computer systems (e.g., power, cooling, operating system), though these components are not specifically shown in FIG. 9B for simplicity. In other implementations, different configurations of the computer system can be used (e.g., different bus or storage configurations or a multi-processor configuration).

In one implementation, the PC distribution system 100 is a system configured entirely with hardware including one or more digital signal processors (DSPs), general purpose microprocessors, application specific integrated circuits (ASICs), field programmable gate/logic arrays (FPGAs), or other equivalent integrated or discrete logic circuitry. In another implementation, the PC distribution system 100 is configured with a combination of hardware and software. For example, the sieve functions 120, 122, 124 are configured with software residing within a separate processor, while the scrambler 150 is configured as hardware.

The description herein of the disclosed implementations is provided to enable any person skilled in the art to make or use the present disclosure. Numerous modifications to these implementations would be readily apparent to those skilled in the art.

Various implementations of the present disclosure are realized in electronic hardware, computer software, or combinations of these technologies. Some implementations include one or more computer programs executed by one or more computing devices. In general, the computing device includes one or more processors, one or more data-storage components (e.g., volatile or non-volatile memory modules and persistent optical and magnetic storage devices, such as hard disk drives, CD-ROM drives, and magnetic tape drives), one or more input devices (e.g., game controllers, mice and keyboards), and one or more output devices (e.g., display devices).

The computer programs include executable code that is usually stored in a persistent storage medium and then copied into memory at run-time. At least one processor executes the code by retrieving program instructions from memory in a prescribed order. When executing the program code, the computer receives data from the input and/or storage devices, performs operations on the data, and then delivers the resulting data to the output and/or storage devices.

Those of skill in the art will appreciate that the various illustrative modules and method steps described herein can be implemented as electronic hardware, software, firmware or combinations of the foregoing. To clearly illustrate this interchangeability of hardware and software, various illustrative modules and method steps have been described herein generally in terms of their functionality. Whether such functionality is implemented as hardware or software depends upon the particular application and design constraints imposed on the overall system.

## Claims

1. A point cloud distribution system (100), comprising:
a plurality of sieve function generators (120, 122, 124) configured to apply a plurality of sieve functions on a full resolution point cloud (110), PC, to generate a plurality of partial point clouds (130, 132, 134), PCs,
wherein the plurality of partial PCs is a group of disjointed elements which together makes up the full resolution PC and applying the plurality of sieve functions comprises decimating the full resolution PC to generate disjointed partial PCs using each sieve function of the plurality of sieve functions; and
a plurality of scramblers (150, 152, 154) configured to scramble the plurality of partial PCs using a plurality of secret keys to produce a plurality of scrambled PCs (160, 162, 164), wherein
the plurality of sieve functions comprises a first sieve function, a second sieve function and a third sieve function,
the plurality of scramblers comprises a first AES256 scrambler, a second AES256 scrambler and a third AES256 scrambler,
the full resolution PC is divided into slices of 16 points, and
the first sieve function keeps the 1st point of each slice, the second sieve function keeps the 5th, 9th and 13th points of each slice, and the third sieve function keeps the 2nd, 3rd, 4th, 6th, 7th, 8th, 10th, 11th, 12th, 14th, 15th and 16th points of each slice.

2. The system of claim 1, further comprising
a distributor configured to distribute at least one scrambled PC and at least one selected secret key,
wherein the selected secret key is selected based on an appropriate resolution determined for an intended recipient.

3. The system of claim 1, wherein a first secret key is selected for a first PC, a second secret key is selected for a second PC that is higher resolution than the first PC, and the first key can be derived from the second secret key.

4. The system of claim 1, wherein cascading secret keys of the plurality of secret keys are generated using one-way hashing functions starting from a secret key that can recreate the full resolution point cloud.

5. A method for distributing different resolution point clouds of a full resolution point cloud (110), the method comprising:
applying a plurality of sieve functions to the full resolution point cloud, PC, to generate a plurality of partial point clouds (130, 132, 134), PCs,
wherein the partial PCs are disjointed elements of the full resolution PC and applying a plurality of sieve functions comprises decimating the full resolution PC to generate disjointed partial PCs using each sieve function of the plurality of sieve functions;
scrambling each partial PC of the plurality of partial PCs using a respective one of a plurality of secret keys; and
distributing at least one scrambled PC (160, 162, 164) and a selected secret key to an intended recipient,
wherein the selected secret key is selected based on an appropriate resolution determined for the intended recipient, wherein
the plurality of sieve functions comprises a first sieve function, a second sieve function and a third sieve function,
wherein scrambling each partial PC of the plurality of partial PCs is performed using a first AES256 scrambler, a second AES256 scrambler and a third AES256 scrambler,
the full resolution PC is divided into slices of 16 points, and
the first sieve function keeps the 1st point of each slice, the second sieve function keeps the 5th, 9th and 13th points of each slice, and the third sieve function keeps the 2nd, 3rd, 4th, 6th, 7th, 8th, 10th, 11th, 12th, 14th, 15th and 16th points of each slice.

6. The method of claim 5, wherein disjointed partial PCs form the full resolution PC.

7. The method of claim 5, wherein a number of the plurality of sieve functions is equal to a number of the plurality of secret keys.

8. The method of claim 5, wherein the selected secret key is able to descramble at least one of the at least one scrambled PC.

9. The method of claim 5, wherein a first secret key is selected for a first PC, a second secret key is selected for a second PC that is higher resolution than the first PC, and the first key can be derived from the second secret key.

## Patentansprüche

1. Punktwolkenverteilungssystem (100), umfassend:
eine Vielzahl von Siebfunktionsgeneratoren (120, 122, 124), die konfiguriert sind, um eine Vielzahl von Siebfunktionen auf eine Punktwolke (110), PC, mit voller Auflösung anzuwenden, um eine Vielzahl von Teilpunktwolken (130, 132, 134), PCs, zu generieren,
wobei die Vielzahl von Teil-PCs eine Gruppe von unzusammenhängenden Elementen ist, die zusammen die PC mit voller Auflösung darstellen, und das Anwenden der Vielzahl von Siebfunktionen ein Dezimieren der PC mit voller Auflösung umfasst, um unzusammenhängende Teil-PCs unter Verwendung jeder Siebfunktion der Vielzahl von Siebfunktionen zu generieren; und
eine Vielzahl von Verwürflern (150, 152, 154), die konfiguriert sind, um die Vielzahl von Teil-PCs unter Verwendung einer Vielzahl von geheimen Schlüsseln zu verwürfeln, um eine Vielzahl von verwürfelten PCs (160, 162, 164) zu produzieren, wobei
die Vielzahl von Siebfunktionen eine erste Siebfunktion, eine zweite Siebfunktion und eine dritte Siebfunktion umfasst,
die Vielzahl von Verwürflern einen ersten AES256-Verwürfler, einen zweiten AES256-Verwürfler und einen dritten AES256-Verwürfler umfasst,
die PC mit voller Auflösung in Scheiben von 16 Punkten unterteilt wird und
die erste Siebfunktion den 1. Punkt jeder Scheiben beibehält, die zweite Siebfunktion den 5., 9. und 13. Punkt jeder Scheibe beibehält und die dritte Siebfunktion den 2., 3., 4., 6., 7., 8., 10., 11., 12., 14., 15. und 16. Punkt jeder Scheibe beibehält.

2. System nach Anspruch 1, ferner umfassend
einen Verteiler, der konfiguriert ist, um mindestens eine verwürfelte PC und mindestens einen ausgewählten geheimen Schlüssel zu verteilen,
wobei der ausgewählte geheime Schlüssel basierend auf einer für einen vorgesehenen Empfänger bestimmten geeigneten Auflösung ausgewählt wird.

3. System nach Anspruch 1, wobei ein erster geheimer Schlüssel für eine erste PC ausgewählt wird, ein zweiter geheimer Schlüssel für eine zweite PC ausgewählt wird, die von einer höheren Auflösung als die erste PC ist, und der erste Schlüssel aus dem zweiten geheimen Schlüssel abgeleitet werden kann.

4. System nach Anspruch 1, wobei kaskadierende geheime Schlüssel der Vielzahl von geheimen Schlüsseln unter Verwendung von Einweg-Hash-Funktionen generiert werden, die bei einem geheimen Schlüssel beginnen, der die Punktwolke mit voller Auflösung wiederherstellen kann.

5. Verfahren zum Verteilen von Punktwolken unterschiedlicher Auflösung einer Punktwolke (110) mit voller Auflösung, das Verfahren umfassend:
Anwenden einer Vielzahl von Siebfunktionen auf die Punktwolke, PC, mit voller Auflösung, um eine Vielzahl von Teilpunktwolken (130, 132, 134), PCs, zu generieren,
wobei die Teil-PCs unzusammenhängende Elemente der PC mit voller Auflösung sind und das Anwenden einer Vielzahl von Siebfunktionen das Dezimieren der PC mit voller Auflösung umfasst, um unzusammenhängende Teil-PCs unter Verwendung jeder Siebfunktion der Vielzahl von Siebfunktionen zu generieren;
Verwürfeln jeder Teil-PC der Vielzahl von Teil-PCs unter Verwendung eines jeweiligen einer Vielzahl von geheimen Schlüsseln; und
Verteilen mindestens einer verwürfelten PC (160, 162, 164) und eines ausgewählten geheimen Schlüssels an einen vorgesehenen Empfänger,
wobei der ausgewählte geheime Schlüssel basierend auf einer für den vorgesehenen Empfänger bestimmten geeigneten Auflösung ausgewählt wird, wobei
die Vielzahl von Siebfunktionen eine erste Siebfunktion, eine zweite Siebfunktion und eine dritte Siebfunktion umfasst,
wobei das Verwürfeln jeder Teil-PC der Vielzahl von Teil-PCs unter Verwendung eines ersten AES256-Verwürflers, eines zweiten AES256-Verwürflers und eines dritten AES256-Verwürflers durchgeführt wird,
die PC mit voller Auflösung in Scheiben von 16 Punkten unterteilt wird und
die erste Siebfunktion den 1. Punkt jeder Scheiben beibehält, die zweite Siebfunktion den 5., 9. und 13. Punkt jeder Scheibe beibehält und die dritte Siebfunktion den 2., 3., 4., 6., 7., 8., 10., 11., 12., 14., 15. und 16. Punkt jeder Scheibe beibehält.

6. Verfahren nach Anspruch 5, wobei unzusammenhängende Teil-PCs die PC mit voller Auflösung ausbilden.

7. Verfahren nach Anspruch 5, wobei eine Anzahl der Vielzahl von Siebfunktionen gleich einer Anzahl der Vielzahl von geheimen Schlüsseln ist.

8. Verfahren nach Anspruch 5, wobei der ausgewählte geheime Schlüssel in der Lage ist, mindestens eine der mindestens einen verschlüsselten PC zu entschlüsseln.

9. Verfahren nach Anspruch 5, wobei ein erster geheimer Schlüssel für eine erste PC ausgewählt wird, ein zweiter geheimer Schlüssel für eine zweite PC ausgewählt wird, die von einer höheren Auflösung als die erste PC ist, und der erste Schlüssel aus dem zweiten geheimen Schlüssel abgeleitet werden kann.

## Revendications

1. Système de distribution de nuage de points (100), comprenant :
une pluralité de générateurs de fonctions de tamis (120, 122, 124) configurés pour appliquer une pluralité de fonctions de tamis sur un nuage de points (110), PC, en pleine résolution afin de générer une pluralité de nuages de points (130, 132, 134), PC, partiels,
dans lequel la pluralité de PC partiels est un groupe d'éléments disjoints qui constituent ensemble le PC en pleine résolution et l'application de la pluralité de fonctions de tamis comprend la décimation du PC en pleine résolution pour générer des PC partiels disjoints à l'aide de chaque fonction de tamis de la pluralité de fonctions de tamis ; et
une pluralité de brouilleurs (150, 152, 154) configurés pour brouiller la pluralité de PC partiels à l'aide d'une pluralité de clés secrètes pour produire une pluralité de PC brouillés (160, 162, 164), dans lequel
la pluralité de fonctions de tamis comprend une première fonction de tamis, une deuxième fonction de tamis et une troisième fonction de tamis,
la pluralité de brouilleurs comprend un premier brouilleur AES256, un deuxième brouilleur AES256 et un troisième brouilleur AES256,
le PC pleine résolution est divisé en tranches de 16 points, et
la première fonction de tamis conserve le 1er point de chaque tranche, la deuxième fonction de tamis conserve les 5e, 9e et 13e points de chaque tranche, et la troisième fonction de tamis conserve les 2e, 3e, 4e, 6e, 7e, 8e, 10e, 11e, 12e, 14e, 15e et 16e points de chaque tranche.

2. Système selon la revendication 1, comprenant en outre
un distributeur configuré pour distribuer au moins un PC brouillé et au moins une clé secrète sélectionnée,
dans lequel la clé secrète sélectionnée est sélectionnée sur la base d'une résolution appropriée déterminée pour un destinataire prévu.

3. Système selon la revendication 1, dans lequel une première clé secrète est sélectionnée pour un premier PC, une seconde clé secrète est sélectionnée pour un second PC qui présente une résolution supérieure à celle du premier PC, et la première clé peut être dérivée de la seconde clé secrète.

4. Système selon la revendication 1, dans lequel des clés secrètes en cascade de la pluralité de clés secrètes sont générées à l'aide de fonctions de hachage unidirectionnelles à partir d'une clé secrète qui peut recréer le nuage de points en pleine résolution.

5. Procédé de distribution de nuages de points de résolution différente d'un nuage de points en pleine résolution (110), le procédé comprenant :
l'application d'une pluralité de fonctions de tamis au nuage de points, PC, en pleine résolution pour générer une pluralité de nuages de points (130, 132, 134), PC, partiels,
dans lequel les PC partiels sont des éléments disjoints du PC en pleine résolution et l'application d'une pluralité de fonctions de tamis comprend la décimation du PC en pleine résolution pour générer des PC partiels disjoints à l'aide de chaque fonction de tamis de la pluralité de fonctions de tamis ;
le brouillage de chaque PC partiel de la pluralité de PC partiels à l'aide d'une clé secrète respective d'une pluralité de clés secrètes ; et
la distribution d'au moins un PC brouillé (160, 162, 164) et d'une clé secrète sélectionnée à un destinataire prévu,
dans lequel la clé secrète sélectionnée est sélectionnée sur la base d'une résolution appropriée déterminée pour le destinataire prévu, dans lequel
la pluralité de fonctions de tamis comprend une première fonction de tamis, une deuxième fonction de tamis et une troisième fonction de tamis,
dans lequel le brouillage de chaque PC partiel de la pluralité de PC partiels est réalisé à l'aide d'un premier brouilleur AES256, d'un deuxième brouilleur AES256 et d'un troisième brouilleur AES256,
le PC pleine résolution est divisé en tranches de 16 points, et
la première fonction de tamis conserve le 1er point de chaque tranche, la deuxième fonction de tamis conserve les 5e, 9e et 13e points de chaque tranche, et la troisième fonction de tamis conserve les 2e, 3e, 4e, 6e, 7e, 8e, 10e, 11e, 12e, 14e, 15e et 16e points de chaque tranche.

6. Procédé selon la revendication 5, dans lequel des PC partiels disjoints forment le PC en pleine résolution.

7. Procédé selon la revendication 5, dans lequel un nombre de la pluralité de fonctions de tamis est égal à un nombre de la pluralité de clés secrètes.

8. Procédé selon la revendication 5, dans lequel la clé secrète sélectionnée est capable de désembrouiller au moins l'un parmi l'au moins un PC brouillé.

9. Procédé selon la revendication 5, dans lequel une première clé secrète est sélectionnée pour un premier PC, une seconde clé secrète est sélectionnée pour un second PC qui présente une résolution supérieure à celle du premier PC, et la première clé peut être dérivée de la seconde clé secrète.
